# EUROPEAN PATENT APPLICATION

(11) **EP 0 740 145 A1**
(43) Date of publication of application: **30.10.1996**
(21) Application number: 96106677.6
(22) Date of filing: 26.04.1996
(51) Int. Cl.: G01N 19/04, F01L 3/22

(54) **Method of and device for testing the bonding strength of a semi-finished valve seat**

(30) Priority: 26.04.1995 JP 102016/95
(71) Applicant: YAMAHA HATSUDOKI KABUSHIKI KAISHA, Iwata-shi Shizuoka-ken, 438 (JP)
(72) Inventor: Shuhei, Adachi, Iwata-shi, Shizuoka-ken (JP); Junichi, Inami, Iwata-shi, Shizuoka-ken (JP)
(74) Representative: Grünecker, Kinkeldey, Stockmair & Schwanhäusser Anwaltssozietät

(57) **Abstract**

A method of testing the bonding strength of a semi-finished valve seat (20) of a cylinder head unit (11) whereby a valve seat base material (20) is metallurgically bonded to an opening (13A,14A) of said cylinder unit (11) and the inner diameter of said bonded valve seat base material is smaller than an inner diameter of said opening, comprises the steps of hooking a test device (41) on that extending part (44) of said valve seat base material (20) facing to the interior of said opening (13A,14A) and applying a tensile force to this device (41) directed to the outside of said cylinder head unit (11).

## Description

This invention relates to a method of testing the bonding strength of a semi-finished valve seat of a cylinder head unit whereby a valve seat base material is metallurgically bonded to an opening of said cylinder unit and the inner diameter of said bonded valve seat base material is smaller than an inner diameter of said opening and a device for testing the bonding strength of a semi-finished valve seat of a cylinder head unit, whereby said valve seat is metallurgically bonded to an opening of said cylinder unit and the inner diameter of said bonded valve seat is smaller than the inner diameter of said opening.

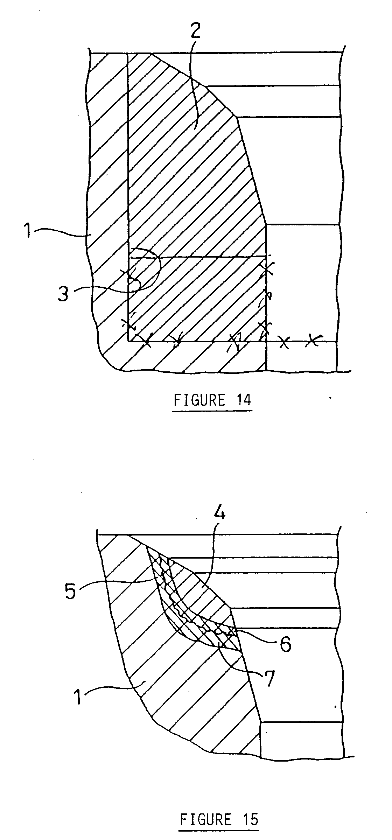

The conventional cylinder head body for engines is typically made of aluminum alloy, and areas of the cylinder head body with which the intake valve and exhaust valve come in contact are provided with valve seats. Since those valve seats are repeatedly contacted by the intake and exhaust valves and subjected to high temperatures, they are made of iron-based sintered alloy which is excellent in wear resistance and high temperature strength. As shown in FIG. 14, they are press fit, to be integral with the cylinder head body, in the recesses formed in the combustion chamber side opening areas of the intake and exhaust ports of the cylinder head, and finished with grinding process.

FIG. 14 shows an enlarged cross section of a portion of the conventional cylinder head where a valve seat is press fit. The figure shows a cylinder head body 1 , a press fit valve seat 2 , and a recess 3 for press fitting the valve seat.

The conventional valve seat includes, in addition to the above-described press fit type, one in which valve seat material is heated and melted by laser heat source and deposited (cladded) on the intake and exhaust port opening areas, and the cladded layer is machined (for instance Japanese Laid-open Patent Publication Sho 62-150014). A valve seat formed by such a laser cladding is shown in FIG. 15.

FIG. 15 shows an enlarged cross section of a valve seat area of a cylinder head in which a valve seat is formed by the laser cladding process, showing a valve seat area 4 , a joining boundary surface 5 of the valve seat area 4 , and melt reaction layers 6 and 7 formed in the vicinity of the joining boundary surface 5 .

A problem with the valve seat formed as described above has been how to test it for the joining strength with which it is joined to the cylinder head body. That is to say, to measure the joining strength, the valve seat may be pulled by a tensile tester from the combustion chamber side and measure the load (separation load) at which the valve seat is separated from the cylinder head. However, there is no hooking portion on the conventional valve seat to which a tensile tester can be connected.

Though the conventional valve seat may be separation tested by providing a hooking portion, the press fit type valve seat with the hooking portion provided is different in rigidity, even if it is very small, from the same valve seat without the hooking portion, and accordingly press fitting conditions also differ, making accurate measurement of the separation load difficult in the finished state of the product.

To form the hooking portion on the valve seat formed by laser cladding, an excessive amount of cladding has to be made and then machined. That is, the number of machining processes increases for forming the hooking portion.

Accordingly, it is an objective of the present invention to provide an improved method of testing the bonding strength of a semi-finished valve seat as indicated above facilitating an accurate measurement of the bonding strength.

According to the invention, this objective is solved by a method as indicated above comprising the steps of hooking a test device on that extending part of said valve seat base material facing to the interior of said opening and applying a tensile force to this device directed to the outside of said cylinder head unit.

According to an advantageous embodiment of the invention, said device comprises a shaft portion directed to the outside of said cylinder head unit and a conically shaped hooking portion, whereby said hooking portion is inserted into said opening so that said shaft portion protrudes to the outside of said cylinder head unit.

The insertion of said hooking portion is enhanced when said device is separated along its longitudinal axis into two parts whereby first one of the two parts is inserted with its axis tilted relative to the axis of said opening deep into said opening through the inside of said bonded valve seat base material and then the other part is inserted in a similar manner and both parts are joined together within said opening.

The test may be carried out either by applying a tensile force to said shaft portion until the valve seat base material is separated from said cylinder head unit or by applying a predetermined tensile force to said shaft portion, whereby said bonding strength of said bonded valve seat base material is acceptable when it is still bonded when said tensile force reaches the predetermined value.

It is a further objective of the present invention to provide an improved method of testing the bonding strength of a semi-finished valve seat as indicated above facilitating an accurate measurement of the bonding strength.

According to the invention, this objective is solved for a device as indicated above by a conically shaped hooking portion extending to a shaft portion.

The insertability of said device may be enhanced when it comprises a first part and a second part separated from each other along a longitudinal axis of said device.

Advantageous load distribution to said valve seat base material is achievable when said first and second parts are formed with a semicircular cross-section and are joinable so as to form said device of a circular cross-section.

Other preferred embodiments of the present invention are laid down in further dependent claims.

As the valve seat member is brought in press contact with the port opening of the cylinder head body and heated, atoms on the press joined boundary surfaces are mutually diffused to produce a eutectic alloy layer of the cylinder head body material metal and the material metal of the coating on the valve seat material in the vicinity of the boundary surfaces. Since the temperature of transformation of the eutectic alloy layer from solid phase to liquid phase is low, the layer under heated condition transforms into liquid phase and, as the valve seat member is pressed against the cylinder head body and heated, is forced out together with the material metal of the cylinder head body, in which plastic flow has occurred, from the joining portion.

As a result, the iron-based sintered alloy of the valve seat material comes in contact with the material metal of the cylinder head body, atoms of both materials are diffused into each other, and under that state the valve seat member is embedded in the port opening.

Therefore, the joining strength does not change with the presence of the hooking area which faces the inside of the port opening.

Further , the separation test may be carried out by using half-finished products at the time of joining the valve seat to the cylinder head body.

In the following, the present invention is explained in greater detail with respect to several embodiments thereof in conjunction with the accompanying drawings, wherein:
FIG. 1 shows a cross section of a valve seat area of a cylinder head body to which a valve seat is joined by the joining method of this invention;
FIG. 2 shows a partially enlarged cross section of a state in which a valve seat member is placed on the port opening;
FIG. 3 is a front elevation of a press machine for joining the valve seat member to the cylinder head body;
FIG. 4 is a side view of the same machine;
FIG. 5 shows a cross section of a state in which an electrode is brought in contact with the valve seat member;
FIG. 6 is a graph of a press force pattern, a current value pattern, and sinking amount pattern;
FIG. 7 shows a cross section of a state in which an alloy layer is formed with the material metal of the coating on the valve seat member and the material metal of the cylinder head body;
FIG. 8 shows a cross section of a state in which plastic flow has occurred in the material metal in the cylinder head body;
FIG. 9 shows a cross section of a state in which the valve seat member is embedded in the cylinder head body;
FIG. 10 shows a cross section of a state in which the valve seat portion has been finish processed;
FIG. 11 is a plan view of an arrangement in which a shield is used when electric current is applied;
FIG. 12 shows a cross section of a state in which the separation test jig is attached to the valve seat member;
FIG. 13 shows a cross section of another embodiment in which the shape of the press contact area is changed. FIGs. 13(a) and 13(b) show an example in which a raised portion is formed only on the valve seat member. FIG. 13(c) shows an example in which the raised portion is formed only on the cylinder head body;
FIG. 14 shows an enlarged cross section of a portion of the conventional cylinder head where a valve seat is press fit; and
FIG. 15 shows an enlarged cross section of a valve seat portion of a cylinder head in which a valve seat is formed by the laser cladding process.

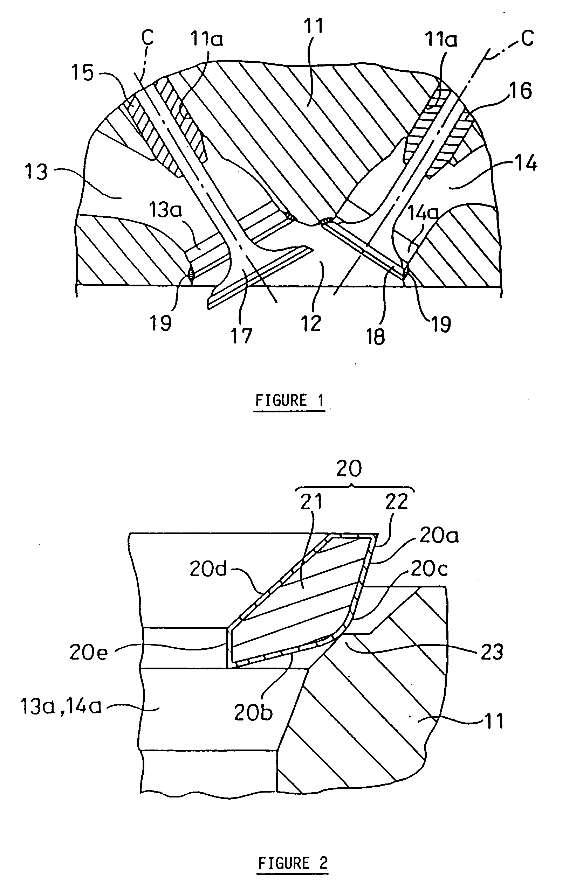

An embodiment of this invention will be described in detail in reference to FIGs. 1 to 12.

FIG. 1 shows a cross section of a valve seat area of a cylinder head of this invention. FIG. 2 shows a partially enlarged cross section of a state in which a valve seat member is placed on the port opening.

### (0015)

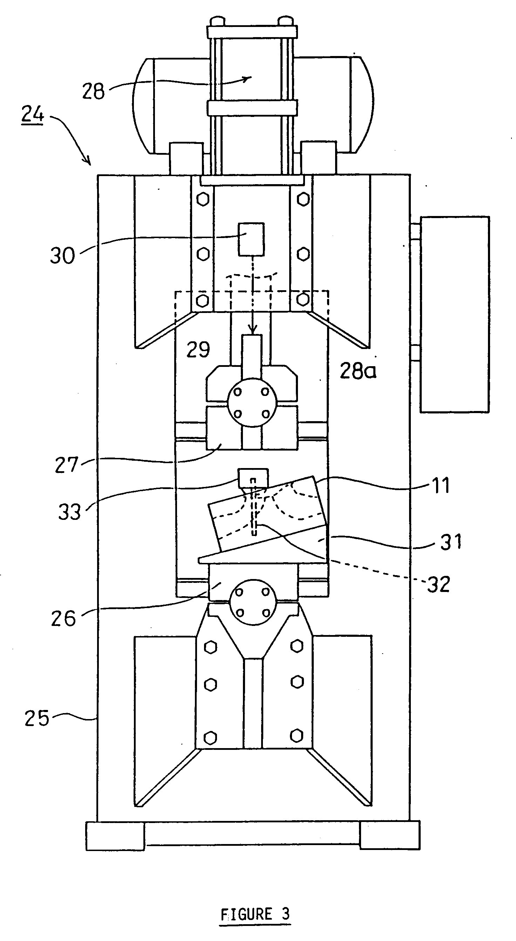

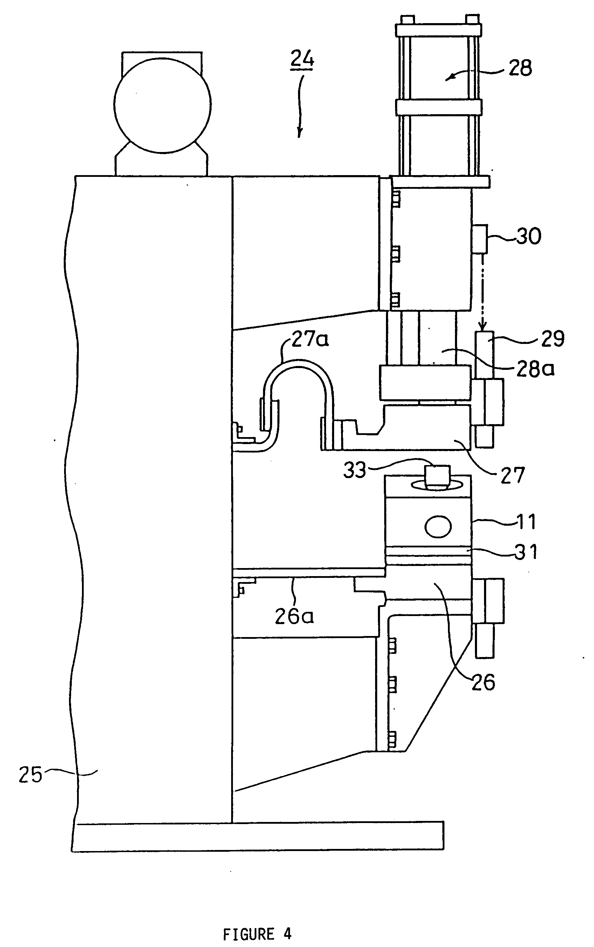

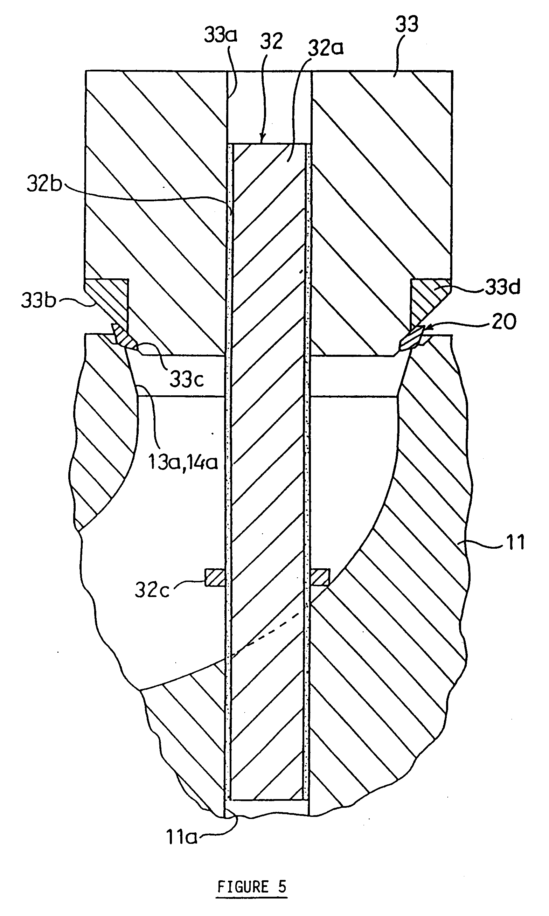

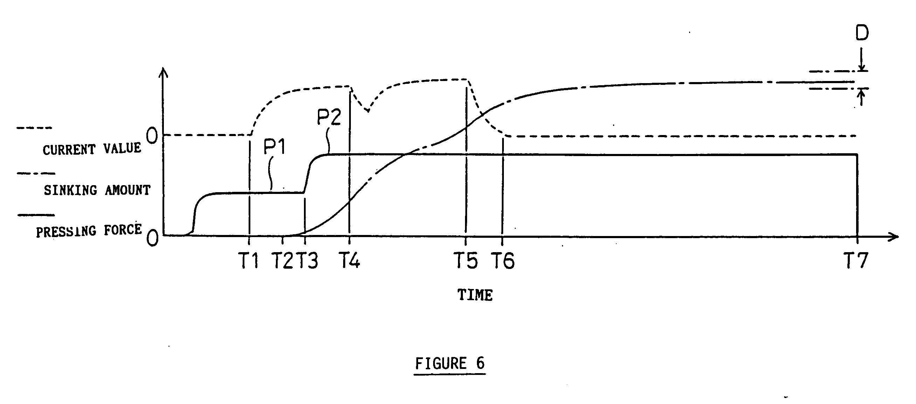

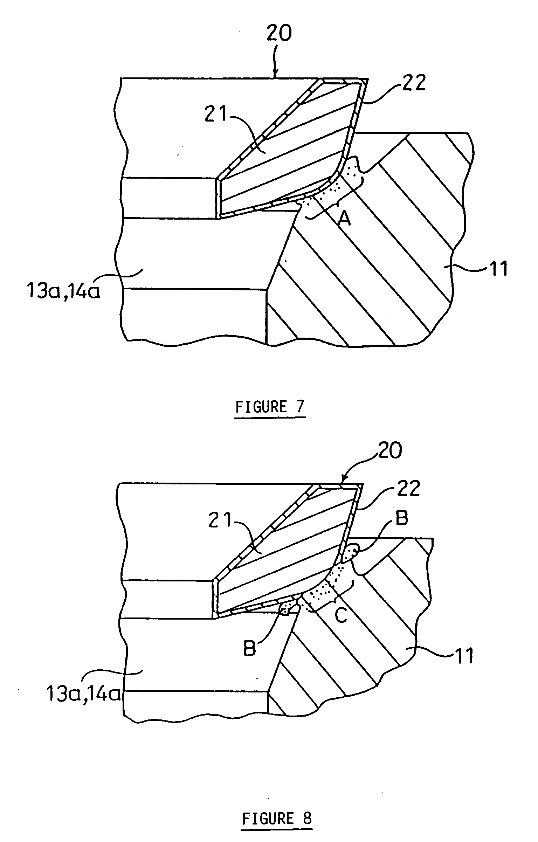

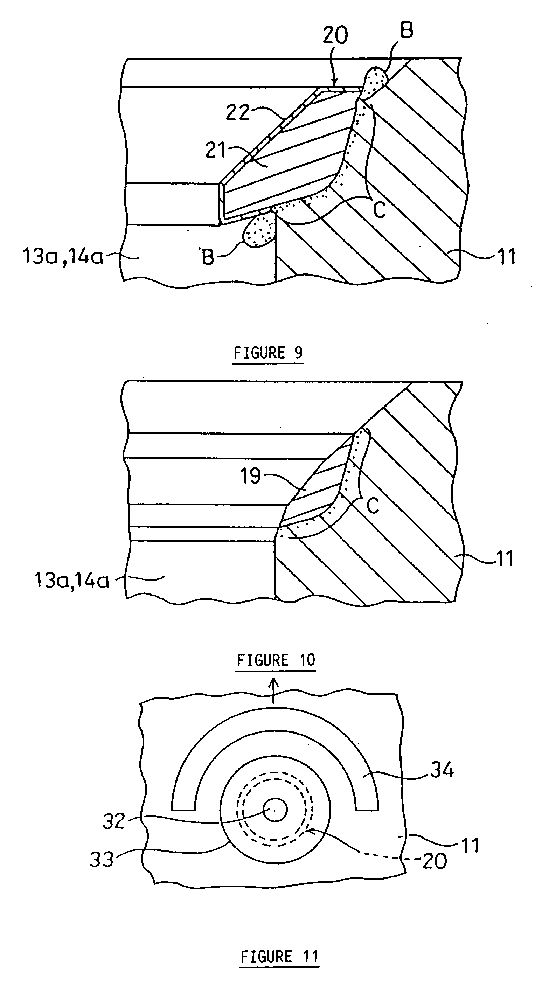

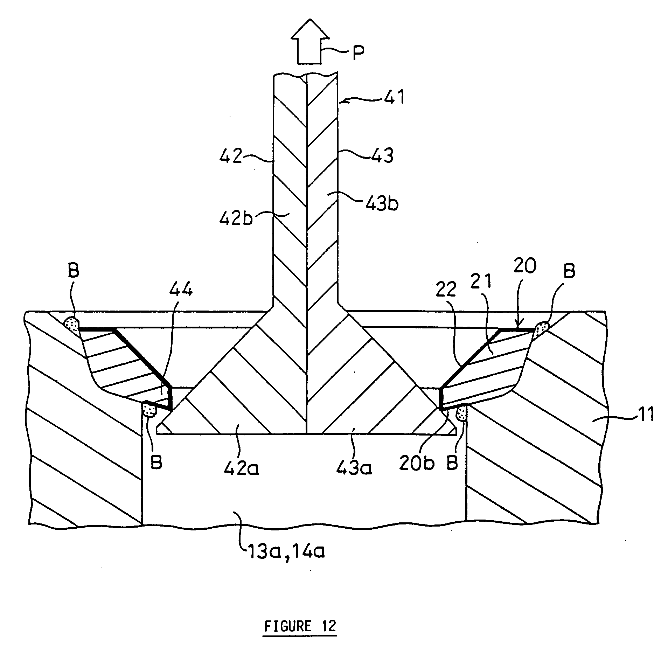

FIG. 3 is a front elevation of a press machine for joining the valve seat member to the cylinder head body. FIG. 4 Is a side view of the same machine. FIG. 5 shows a cross section of a state in which an electrode is brought in contact with the valve seat member. FIG. 6 is a graph of a press force pattern, a current value pattern, and sinking amount pattern. FIG. 7 shows a cross section of a state in which an alloy layer formed with the material metal of the coating on the valve seat member and the material metal of the cylinder head body is formed. FIG. 8 shows a cross section of a state in which plastic flow has occurred in the material metal in the cylinder head body. FIG. 9 shows a cross section of a state in which the valve seat member is embedded in the cylinder head body. FIG. 10 shows a cross section of a state in which the valve seat portion has been finish processed. FIG. 11 is a plan view of an arrangement in which a magnetic shield is used when electric current is applied. FIG. 12 is a cross-sectional view of a state in which a separation test jig is attached to the valve seat member.

In those figures, a cylinder head body 11 for a four cycle engine is made of a cast aluminum alloy material with a dome-shaped recess 12 for a combustion chamber opening downward, an intake port 13 opening to the recess 12 , and an exhaust port 14 opening to the recess 12 .

The aluminum alloy used for the cylinder head body 11 is an Al-Si-Mg-based aluminum alloy specified in JIS (Japanese Industrial Standard) as AC4C. The reason for using that material is the strongest joining strength of the valve seat in comparison with other aluminum alloys.

An intake valve 17 and an exhaust valve 18 are installed in the upper wall areas of the intake port 13 and the exhaust port 14 through valve guides 15 and 16 , respectively. A valve seat 19 , to be described later, is joined to each of openings of both ports 13 and 14 . The valve guides 15 and 16 are secured as they are press fit into valve guide holes 11a formed in the cylinder head body 11 . The valve guide holes 11a are formed so that their axes C align with the axes of the openings 13a and 14a of the intake port 13 and the exhaust port 14 .

Each of the valve seats 19 shown in FIG. 1 is made by press joining an annularly formed valve seat member to the port openings 13a and 14a under heated state, followed by finish machining. The valve seat member is shown as 20 in FIG. 2.

The valve seat member 20 is made of an iron-based sintered material member formed in an annular shape 21 and covered with a copper coating 22 .

As the material for the annular member 21 in this embodiment, an iron-based sintered material member in which copper is melt-impregnated is used from the viewpoint of minimizing internal resistance heat during energization which will be described later. The copper coating 22 is formed by electroplating the annular member 21 with a coating thickness of 0.1 to 30 micrometers.

However, it is not obligatory that said annular member 21 is provided with such a coating. It is sufficient when the metals of the cylinder head unit and the annular member 21 form an eutectic alloy bonding.

As shown in FIG. 2, the valve seat member 20 is formed so that part of its circumference, when placed on each of the openings 13a and 14a of the intake port 13 and the exhaust port 14 , faces the inside of each of the openings 13a and 14a . By the way, FIG. 2 shows the cylinder head body 11 upside down, with the underside (opening side of the recess 12 for the combustion chamber) facing upward.

To describe in detail, the outer circumferential surface 20a of the valve seat member 20 is sloped so that the outside diameter of the valve seat member 20 is smaller toward the cylinder head body 11 side and the bottom surface 20b is sloped so that it is formed deeper into the cylinder head body 11 toward the center of the valve seat member 20 . An outside surface where the outer circumferential surface 20a and the bottom surface 20b meet each other is formed in a convex curved surface. In FIG. 2, the convex curved surface is shown as 20c .

A raised portion 23 is formed on part of each of the openings 13a and 14a which faces the convex curved surface 20c so as to partially reduce the inside diameter of each of the intake port 13 and the exhaust port 14 .

In other words, when the valve seat member 20 is placed as shown in FIG. 2 on each of the openings 13a and 14a , the convex curved surface 20c comes in contact with the raised portion 23 of the cylinder head body 11 .

The inside surface of the valve seat member 20 comprises a surface 20d sloped so that the inside diameter of the valve seat member 20 becomes smaller toward the cylinder head body 11 , and an axially extended surface 20e extending from the inside circumferential end of the sloped surface 20d parallel to its axis.

To join the valve seat member 20 formed as described above to each of the openings 13a and 14a of the cylinder head body 11 , a press machine 24 shown in FIGs. 3 and 4 is used.

The press machine 24 comprises a base 25 , a lower platen 26 secured to the lower part of the base 25 , and an upper platen 27 vertically movable relative to the lower platen 26 . The upper platen 27 is attached to the lower end of a rod 28 which is a working end of a cylinder device 28 attached, with its axis directed vertically, to the upper part of the base 25 .

A power supply (not shown) supplies power to the lower platen 26 and the upper platen 27 through conductor members 26a and 27a , respectively. The conductor member 27a connected to the upper platen 27 is constituted to flexibly deform or move according to the vertical movements of the upper platen 27 . This embodiment is constituted so that the upper platen 27 is the positive electrode and the lower platen 26 is the negative electrode.

In the upper part of the base 25 supporting the cylinder device 28 is provided a displacement meter 30 which emits laser beams to a reflector member 29 fixed to the front part of the upper platen 27 to measure the displacement of the upper platen 27 by measuring the distance to the reflector member 29 using the laser beams reflected from the reflector member 29 .

To join the valve seat member 20 by using the press machine 24 , first the lower electrode 31 is fixed on the lower platen 26 , and the cylinder head body 11 is placed on and fixed to the lower electrode 31 . Here, the cylinder head body 11 is placed with its recess 12 for the combustion chamber facing upward and positioned so that the axis through the port opening to which the valve seat member 20 is to be joined aligns with the axis of the rod 28a of the cylinder device 28 .

Next, as shown in FIG. 5, a guide rod 32 is inserted from the recess 12 side. The guide rod 32 is made of a metallic round bar 32a with its outside surface coated with an insulation material 32b such as alumina, and its length is such that it projects up from the combustion chamber side end surface of the cylinder head body 11 . In this embodiment, the insulation material 32b is made by spraying ceramic material such as alumina on the round bar 32a , followed by polishing.

After that, the valve seat member 20 is placed over the port opening, and the upper electrode 33 is placed on the valve seat member 20 . The upper electrode 33 is provided with a centered through-hole 33a into which the guide rod 32 is inserted, and its lower end is formed with a tapered surface 33b for coming into tight contact with the sloped surface (20d) (FIG. 2) of the valve seat member 20 and with a circumferential positioning surface 33c for coming into tight contact with the axially extended surface 20e . A magnetic member 33d is fixed to the lower end of the upper electrode 33 so that the valve seat member 20 is magnetically attracted.

Although not illustrated in the figures, said guide rod 32 may be fixedly connected to said upper electrode 33.

In other words, the upper electrode 33 is positioned coaxially with the port opening of the cylinder head body 11 as the guide rod 32 is fit into the through hole 33a , and the valve seat member 20 is coaxially positioned with the port opening as the tapered surface 33b and the circumferential surface 33c are brought in tight contact with the valve seat member 20 .

After the electrode 33 is placed on the valve seat member 20 , the upper electrode 33 is rotated to check if the valve seat member 20 is securely fit.

After that, the cylinder device 28 is driven so that the upper platen 27 is lowered and brought in tight contact with the upper electrode 33 . Here, the underside of the upper platen 27 is made parallel to the upper surface of the upper electrode 33 .

Next, the cylinder device 28 is driven to lower the upper platen 27 and to press the valve seat member 20 with a constant pressing force through the upper electrode 33 against the cylinder head body 11 . Here, since the moving direction of the upper electrode 33 is restricted by the guide rod 32 , the direction of the pressing force applied to the valve seat member 20 is aligned with the axis of each of the port openings 13a and 14a . Therefore, the valve seat member 20 is pressed in the state of its axis aligned with the axis of each of the port openings 13a and 14a along the axis.

The pressing force is changed according to the pressing force pattern shown with a solid line in FIG. 6. Thai is, a relatively small, constant pressing force P1 is applied during the first period of the joining process, and thereafter a relatively large, second pressing force P2 is applied to the end of the process.

When the upper platen 27 is stabilized after the pressing with the first pressing force P1 is started, the distance between the laser displacement meter 30 and the reflector member 29 is measured with the laser displacement meter 30 , and the measured distance is recorded as a descent start position of the upper platen 27 . After a time T1 shown in FIG. 6 has elapsed from the start of the pressing with the first pressing force P1, a voltage is applied between the upper platen 27 and the lower platen 26 so that a current flows between the two platens or through the valve seat member 20 , the cylinder head body 11 , and the lower electrode 31 . Here, the current flows from the upper electrode 33 toward the cylinder head body 11 . The current value here is also changed according to the current value pattern shown with a broken line in FIG. 6. In other words, after the current is increased, the current is lowered to almost zero, and again increased, and while the pressing force is held unchanged in the final stage of joining, the current is lowered to zero.

Here, as shown in FIG. 2, the convex surface (20c) of the valve seat member 20 is in contact with the raised portion 23 of the cylinder head body 11 . Since the contact area between those components is very small, when the current is applied as described above, the electric resistance in the contact area increases and heat is produced in the contact area. The heat is conducted throughout the contact boundary surface between the valve seat member 20 and the cylinder head body 11 .

When the temperature on the contact boundary surface between the valve seat member 20 and the cylinder head body 11 rises, atoms in the material metals which are in pressing contact with each other in solid state (copper in the copper coating 22 and aluminum alloy in the cylinder head body 11) begin active movements and diffuse into each other. By the way, to what extent the aluminum oxide coating on the cylinder head body 11 hinders the diffusion of atoms is unknown.

When the mutual diffusion of atoms occurs as described above, the composition in the vicinity of the boundary surface becomes eutectic alloy of copper constituting the copper coating 22 and aluminum alloy of the cylinder head body 11 so that it can transform from solid state to liquid state at a lower temperature in comparison with pure copper. The state at this time in the vicinity of the boundary surface is schematically shown in FIG. 7. In FIG. 7, the area where mutual diffusion of atoms has occurred and the eutectic layer has been produced is shown with a symbol A.

When the temperature in the vicinity of the boundary surface further rises and part of the eutectic alloy layer transforms into liquid phase, the diffusion phenomenon of atoms becomes more active, the eutectic alloy layer grows, and accordingly the boundary surface between solid and liquid phases expands.

Along with the progress in the transformation of the eutectic alloy layer into the liquid phase, plastic flow (plastic deformation) occurs in the aluminum alloy in the cylinder head body 11 adjacent to the eutectic alloy layer, because it is pressed by the valve seat member 20 and its temperature is raised by the resistance heat.

Since the plastic flow occurs symmetrically upward and downward directions with respect to the first contact area in FIG. 7, the eutectic alloy layer which has transformed into liquid phase is pushed out from the contact area along with the plastic flow as shown in FIG. 8. In FIG. 8, the area where the eutectic alloy layer has been forced out is shown with a symbol B. Here, part of the copper coating 22 on the valve seat member 20 is also transformed into eutectic alloy and forced out from the contact area, and part of the annular member 21 comes in contact with aluminum alloy, causing atom diffusion phenomenon between the two components. The area where the diffusion phenomenon is taking place is shown with a symbol C in FIG. 8.

As described above, since part of the eutectic alloy layer is forced out from the contact area and the aluminum alloy flows plastically, the valve seat member 20 starts to sink into the cylinder head body 11 at the time T2 shown in FIG. 6. After the valve seat member 20 starts to sink as described above, at the time T3 in FIG. 6, the pressing force is increased to the second pressing force P2.

As the pressing force is increased, the plastic flow amount of the aluminum alloy increases, and the amount of the eutectic alloy forced out also increases. As a result, eutectic alloy consisting of copper-aluminum alloy is additionally produced in part of the contact area where the eutectic reaction has not occurred. The above phenomenon is repeated and the eutectic alloy layer is transformed into liquid phase and additional amount is forced out from the contact area. Along with the above process, the area in the boundary surface between iron-based sintered alloy of the annular member 21 and aluminum alloy where mutual diffusion of atoms occurs also widens.

After pressing with the second pressing force P2, at the time T4 in FIG. 6, the current value is once reduced near zero and increased again to the previous value. By the temporary reduction in the current value, heat generation is temporarily restricted, removal of the eutectic alloy and the plastic flow are temporarily restricted, and the rate of increase in the sinking amount of the valve seat member 20 is temporarily reduced as shown in FIG. 6. The temporary reduction in the current value is made to prevent undesirable melting of aluminum alloy by the heat.

After the current value is raised to the previous value as described above, it is gradually lowered to zero from the time T5 to the time T6. The above reaction occurs while the current is flowing as a matter of course. However, even after the current is stopped, until the temperature lowers such that the above reaction is impossible, the above reaction continues, and the above phenomenon of production of the eutectic alloy, transformation into liquid phase, and removal by plastic flow occur along with the phenomenon of mutual atom diffusion between the iron-based alloy and the aluminum alloy, while the valve seat member 20 continues to sink, and is finally embedded in the cylinder head body 11 as shown in FIG. 9.

When the increase in the sinking amount almost stops at the time T7 in FIG. 6, pressing with the cylinder device 28 is stopped, the final position of the upper platen 27 is obtained by the laser displacement meter 30 from the distance between the laser displacement meter 30 and the reflector member 29 , and the upper platen 27 is raised to remove the cylinder head body 11 from the press machine 24 . By the way, average current value and total energization time are obtained by the end of the entire process.

Next, total sinking amount of the valve seat member 20 is obtained by calculating the height difference between the descent start position and the final position of the upper platen 27 . If that amount is not within a predetermined range D in FIG. 6, the joining is determined as unacceptable. The allowable range D in this embodiment is about 0.5 mm to about 2 mm. While the range D varies with the material of the cylinder head body 11 and the shape of the valve seat, a range of about 1 mm to 1.5 mm is preferable.

The cylinder head which is determined as acceptable by the sinking amount determination described above is also checked for acceptability with respect to the average current value and the total energization time, and if determined as acceptable and only when further determined acceptable by sampling inspection, it is processed with final machining.

The final processing of the cylinder head is carried out by removing unnecessary part from the cylinder head body 11 in FIG. 9 to which the valve seat member 20 has been joined by turning or grinding for instance as shown in FIG. 10. By the final processing, unnecessary part of the annular body 21 and the copper coating 22 are removed and a valve seat 19 is obtained which is joined to the cylinder head 11 through the atom diffusion area shown with a symbol C in FIG. 10.

The sampling inspection mentioned above is carried out for instance for every manufacturing lot of the valve seat member 20 by applying a tensile force to the valve seat member 20 in the state after joining as shown in FIG. 9 in the direction away from the cylinder head body 11 .

By the way, when the above sampling test is carried out, it is also checked visually if the eutectic alloy forced out from the joining area extends almost entire circumference of the joining area. If the direction of the eutectic alloy being forced out tends to be localized in a specific direction, it is preferable as shown in FIG. 11 to place a magnetic shield 34 in the vicinity of the upper electrode 33 so that the joining area is not affected directly by magnetic field produced at the time of energization.

FIG. 11 is a plan view when the magnetic shield is used, and shows a state in which the upper electrode 33 is attached together with the valve seat member 20 to the cylinder head body 11 . In FIG. 11, the like or identical parts already described in FIGs. 1 to 10 are provided with the same symbols and detailed description is omitted.

In this embodiment, the magnetic shield 34 is made of an iron-based ferromagnetic material in a vertically split cylindrical shape and placed so that its outer circumferential top surface faces the base 25 of the press machine 24 . The direction in which the base 25 is placed is shown with an arrow in FIG. 11.

When the magnetic shield 34 is used as described above, direction and amount of magnetic flux of the magnetic field produced at the time of energization cam be controlled, thereby controlling the direction in which the eutectic alloy is forced out from the joining area.

The sampling inspection procedure using the separation test described above will be described here in reference to FIG. 12.

To carry out the sampling inspection, one end of a jig 41 shown in FIG. 12 is hooked on the valve seat member 20 and the other end of the jig 41 is connected to a tensile tester (not shown). The jig 41 is formed in a poppet valve shape which can be split into right part 43 and left part (42) as seen in FIG. 12. Each of the right part 43 and left part 42 is formed with a semicircular cross section and joined together to form the jig 41 of a circular cross section.

Ends of the parts 42 and 43 which constitute a valve seat member 20 side of them are formed as hooking portions 42a and 43a which, when joined, form a generally conical shape, while the other ends form shaft portions 42b and 43b to be connected to a chucking device of the tensile tester. The bottom end outside diameter of the cone formed by joining together the hooking portions 42a and 43a is set to be greater than the inside diameter of the valve seat member 20 and smaller than the inside diameter of the port openings 13a and 14a .

To carry out the sampling inspection, first the hooking portions 42a and 43a of both parts 42 and 43 are hooked on the inner circumferential brim of the bottom surface 20b of the valve seat member (20) as shown in FIG. 12. Here, first one of the hooking portions, with its axis tilted relative to the axis of the port opening, is inserted deep into each of the port openings 13a and 14a through the inside of the valve seat member 20 , and the other of the hooking portions is inserted deep into each of the port openings 13a and 14a in a similar manner.

Thereafter both of the hooking portions 42a and 43a are joined together within the ports 13 and 14 to be in a normal state. In that state, both parts 42 and 43 are pulled from the combustion chamber side to bring the hooking portions 42a and 43a in contact with the valve seat member 20 . As a result, the jig 41 is hooked from the inner side of each of the port openings 13a and 14a on the inner circumferential portion of each of the valve seat members 20 which faces the insides of each of the port openings 13a and 14a . The inner circumferential portion constitutes the hooking portion of this invention. The hooking portion is shown as (44) in FIG. 12.

In the state of the jig 41 being hooked on the valve seat member 20 , the other end of the jig 41 is connected to the tensile tester and a tensile force P is applied to the valve seat member 20 toward the combustion chamber by pulling the jig 41 with the tensile tester. This test is carried out until the valve seat member 20 is separated from the cylinder head body 11 and the tensile load at the time of separation is determined as the separation load. If the separation load is in excess of a service limit separation load, the tested product is determined as acceptable.

As a result of this separation test, when the constitution of this embodiment was employed, the separation load was 20 KN which proved to be a sufficient joining strength for practical use.

Though this test is carried out by hooking the jig 41 on the hooking portion 44 which is removed in the finish machining process, since the valve seat member 20 is joined to the cylinder head body 11 by the mutual diffusion atoms in the joining boundary surface areas as described above, the joining strength does not change by the presence of the hooking portion 44 , the separation load obtained by the separation test agrees with the separation load of the valve seat 19 in the finished state.

Furthermore, the separation test may be carried out by using half-finished product of the valve seat member 20 at the time of forming the valve seat 19 on the cylinder head body 11 .

In addition to the above test which is a simple tensile separation test of the valve seat member 20 , a heat holding test or heat shock test may be carried out.

The heat holding test may be carried out by letting stand a sample cylinder head body 11 in the state shown in FIG. 9 in a heating oven at 300°C for 24 to 200 hours. The sample is then air cooled, and subjected to the above-mentioned separation test.

The heat shock test may be carried out by heating a sample cylinder head body (11) in the state shown in FIG. 9 in an atmospheric heating oven up to 300°C, taken out from the oven and immediately immersed in ice water of 0°C. The process is repeated for 10 times. The sample is checked for separation or cracks on the valve seat material 20 every time it is immersed and cooled in the ice water, and finally subjected the separation test described above.

The separation test may be carried out, in addition to the sampling test described above, as a rig test. The rig test is the one in which the valve seat member 20 used in the above embodiment is joined to a test piece made of the same material as that of the cylinder head body 11 of the above embodiment in a similar manner to that of the above embodiment, finish machined to form the valve seat 19 which is then repeatedly contacted by an intake valve or exhaust valve for use in actual engines, and the amount of wear of the valve seat 19 is measured.

In the rig test, the intake or exhaust valve is repeatedly seated on the valve seat 19 at a frequency of up to 3000 times per minute while rotating the valve about its axis at a speed of 30 times per minute for 9 hours, and the valve and the seat are checked for the amount of wear on their contact surfaces. The test is carried out in the room atmosphere and the bevel portion of the valve is periodically heated with a gas burner to maintain the temperature of the valve seat 19 at 250 °C for exhaust and 150 °C for intake. The valve spring is set to the same load as that of the actual engine.

As a result of this rig test, the amount of wear of the valve seat 19 of this invention proved a value sufficient for practical use.

The metallurgical joining between the aluminum alloy of the cylinder head body 11 for the cylinder head and the iron-based sintered alloy formed as described above is essentially different from the mechanical joining without being accompanied by atom diffusion and the material is in non-continuous state. It is also different from the metallurgical joining such as the resistance heat joining in which two materials are locally melted by heat produced by electric resistance on the boundary surface, both materials are made into alloy liquid, energization is stopped, and the alloy liquid is cooled to solidify.

In other words, the metallurgical joining in the cylinder head of this embodiment is carried out without leaving a melt reaction layer between different materials and with a continuous structure on the boundary surface between the different materials through mutual diffusion of atoms.

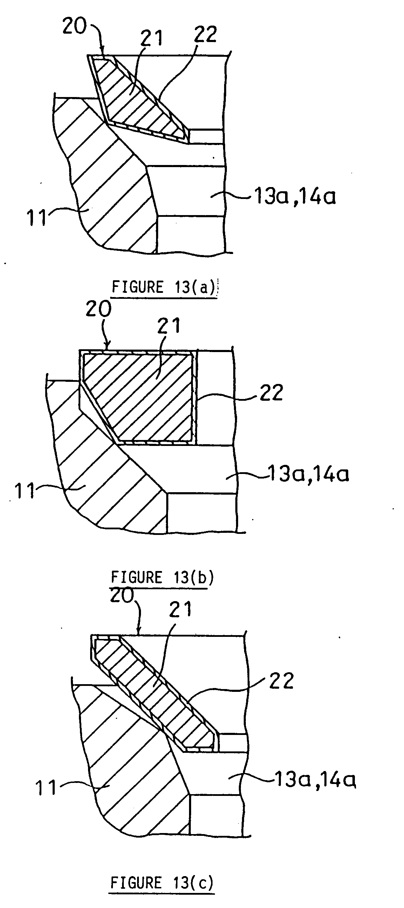

In this embodiment, while the raised portions (convex curved surface 20c, raised portion 23 are formed on both the valve seat member 20 and the port openings 13a and 14a of the cylinder head body 11 and they are brought into press contact with each other, the raised portions may not be formed on both components but may be formed on only one side. Such an embodiment is shown in FIGs. 13(a) through 13(c).

FIG. 13 shows a cross section of another embodiment in which the shape of the press contact area is changed. FIGs. 13(a) and 13(b) show an example in which only the valve seat member is formed with a raised portion. FIG. 13(c) shows an example in which only the cylinder head body is provided with a raised portion. In these drawings, the same or like components as those described in FIGs. 1 to 12 are provided with the same symbols and detailed description is omitted.

In the example shown in FIG. 13(a), the valve seat member 20 is formed in the same shape as in the previous embodiment, and the portion of each of the port openings 13a and (14a) with which the valve seat member 20 comes in contact is formed as a straight sloped surface.

In the example shown in FIG. 13(b), the outer circumferential surface of the valve seat member 20 is formed so as to fit in each of the port openings 13a and 14a . The inner circumferential surface of the valve seat member 20 is different from that of the above embodiment as the valve seat member 20 is formed with an axially extending surface 20e over the entire thickness of the valve seat member 20 . In the example shown in FIG. 13(c), the portion of the valve seat member 20 for coming in contact with the raised portion 23 of the cylinder head body 11 is formed as a straight sloped surface.

The same effect as with the previous embodiment is obtained if the raised portion shown in FIGs. 13(a) to 13(c) is formed on either one of the valve seat member 20 and the cylinder head body 11 . When the raised portion is formed on both components as in this embodiment, plastic flow occurs more easily in the material of the cylinder head body 11 and the amount of plastic flow is relatively large. As a result, area of contact (boundary surface) of the valve seat member 20 increases so that a strong joining is obtained.

While in the above embodiment, iron-based sintered alloy melt-sintered with copper is used as the material for the annular member 21 of the valve seat member 20 , and the annular member 21 is coated with copper deposited by electroplating, those materials and method of forming the coating are not limited to those embodiments but the material for the annular member 21 may be any iron-based sintered alloy and the metal to be melt-sintered may be any metal having an electric resistivity which is not largely different from that of copper. The metal for coating the annular member 21 may be any metal as long as it is capable of forming eutectic alloy with the material of the cylinder head body 11 . In selecting those materials, in this embodiment, materials and methods for forming the coating are selected from the viewpoint of the least cost for manufacturing the cylinder head as an industrial product.

In the embodiment shown in FIGs. 1 to 10, the sinking amount of the the valve seat member 20 is detected at the end of the joining process. However, the sinking amount may be measured constantly from the start of pressing and may be checked if every measurement is within an allowable range. In that way, an unacceptable joining may be detected in the middle of joining and the waste of spending the same time for unacceptable joining as the time for acceptable joining can be eliminated.

As described above, the cylinder head for engines of this invention is formed that the valve seat member is brought in press contact with the combustion side openings of the cylinder head body and joined together by heating produced by energization, with the cylinder head body made of Al-Si-Mg-based aluminum alloy, and the valve seat member made of iron-based sintered alloy annular member with its surface covered with a metallic coating. When the valve seat member is brought in press contact with the port opening of the cylinder head body and heated, atoms on the boundary surface in the joined area are mutually diffused to produce a eutectic alloy layer in the vicinity of the boundary surface consisting of the metallic material of the coating on the valve seat member and the metallic material of the cylinder head body. Since the transformation temperature of the eutectic alloy layer is low, the layer transforms into liquid phase under heating, and forced out from the joining area as plastic flow occurs in the layer while the layer is pressed with the valve seat material and heated.

As a result, the iron-based sintered alloy of the valve seat material comes in contact with the material metal of the cylinder head body, atoms of both materials are diffused into each other, and under that state the valve seat member is embedded in the port opening.

Therefore, since the joining strength does not change whether or not the hooking portion is present which faces the inside of the port opening, by carrying out the separation test with the separation test jig hooked on the hooking portion, the separation load is measured in the same state as that of the finished product in the state of the hooking portion removed. As a result, the separation load in the state of the finished product is measured accurately.

According to the separation test procedure for the valve seat of the second invention, the valve seat member is placed in press contact with and joined by heating to the port opening of the cylinder head body, the valve seat member is an annular member made of iron-based sintered alloy with its surface coated with a metallic material in such a shape that part of its outer circumferential surface faces the inside of the port opening when it is placed on the port opening, the separation test jig is hooked on part of the valve seat member which faces the inside of the port opening, and the tensile force is applied from the combustion chamber side. Therefore, the separation test nay be carried out by using half-finished product at the time of forming the valve seat on the cylinder head body.

Therefore, the number of machining processes does not increase even if the separation test is added, because the machining is required only for the finish machining.

## Claims

1. Method of testing the bonding strength of a semi-finished valve seat of a cylinder head unit (11) whereby a valve seat base material (20) is metallurgically bonded to an opening (13a, 14a) of said cylinder unit (11) and the inner diameter of said bonded valve seat base material (20) is smaller than an inner diameter of said opening (13a, 14a), comprising the steps of hooking a test device (41) on that extending part of said valve seat base material (20) facing to the interior of said opening (13a, 14a) and applying a tensile force to this device (41) directed to the outside of said cylinder head unit (11).

2. Method according to claim 1, **characterized in that** said device (41) comprises a shaft portion (42b, 43b) directed to the outside of said cylinder head unit (11) and a conically shaped hooking portion (42a, 43a), and that said hooking portion (42a, 43a) is inserted into said opening (13a, 14a) so that said shaft portion (42b, 43b) protrudes to the outside of said cylinder head unit (11).

3. Method according to claim 2, **characterized in that** said device (41) is separated along its longitudinal axis into two parts (42, 43) and that said device (41) is inserted into said opening as follows: first one of the two parts (42 or 43) is inserted with its axis tilted relative to the axis of said opening (13a, 14a) deep into said opening through the inside of said bonded valve seat base material (20) and then the other part (42 or 43) is inserted in a similar manner, thereafter both parts (42, 43) are joined together within said opening (13a, 14a).

4. Method according to claim 2 or 3, **characterized in that** a tensile force is applied to said shaft portion (42b, 43b) by means of a tensile tester until the valve seat base material (20) is separated from said cylinder head unit (11).

5. Method according to claim 4, **characterized in that** the tensile force at the moment said valve seat base material (20) separates is determined as a separation load.

6. Method according to claim 5, **characterized in that** said separation load is compared with a predetermined separation load to determine whether this separation load is acceptable.

7. Method according to claim 2 or 3, **characterized in that** a predetermined tensile force is applied to said shaft portion (42b, 43b) whereby said bonding strength of said bonded valve seat base material (20) is acceptable when it is still bonded when said tensile force reaches said predetermined value.

8. Device (41) for testing the bonding strength of a semi-finished valve seat of a cylinder head unit, whereby said valve seat is metallurgically bonded to an opening of said cylinder unit and the inner diameter of said bonded valve seat is smaller than the inner diameter of said opening, **characterized by** a conically shaped hooking portion (42a, 43a) extending to a shaft portion (42b, 43b).

9. Device according to claim 8, **characterized in that** said device (41) comprises a first part (42) and a second part (43) separated from each other along a longitudinal axis of said device (41).

10. Device according to claim 9, **characterized in that** each of said first and second parts (42, 43) are formed with a semicircular cross-section and being joinable so as to form said device of a circular cross-section.

11. Device according to at least one of claims 8 to 10, **characterized in that** said shaft portion (42b, 43b) is connectable to a tensile tester.

12. Device according to at least one of claims 9 to 11, **characterized in that** said conically shaped hooking portion (42a, 43a) is insertable into said opening by separating the first and second parts (42, 43).
